## Europäisches Patentamt
## European Patent Office
## Office européen des brevets

(19)

(11) Veröffentlichungsnummer: **0 006 210**
**A1**

(12) **EUROPÄISCHE PATENTANMELDUNG**

(21) Anmeldenummer: **79101885.6**

(22) Anmeldetag: **11.06.79**

(51) Int. Cl.³: **F 24 D 17/00**

(30) Priorität: 16.06.78 CH 6581/78
29.08.78 CH 9114/78

(43) Veröffentlichungstag der Anmeldung: **09.01.80**
**Patentblatt 80/1**

(84) Benannte Vertragsstaaten: **AT CH DE FR GB IT NL**

(71) Anmelder: **CIBA-GEIGY AG, Patentabteilung Postfach, CH-4002 Basel (CH)**

(72) Erfinder: **Kreibich, Ursula, Dr., Im finstern Boden 15, CH-4125 Riehen (CH)**
Erfinder: **Schmid, Rolf, Dr., Weihermattweg 18, CH-4460 Gelterkinden (CH)**

(54) **Vorrichtung zur Warmwasserbereitung mittels Sonnenenergie.**

(57) Vorrichtung zur Warmwasserbereitung mittels Sonnenenergie, die neben einem Sonnenkollektor (K) drei auf verschiedenen Temperaturniveaus arbeitende Wärmetauscher (A, B, C) welche brauchwasserseitig in Reihe geschaltet sind, einen Latentwärmespeicher (S) mit vernetztem, teilkristallenem Kunststoff als speicherndes Medium, diverse Leitungen, Ventile (1–8), eine Umwälzpumpe (P) und eine elektrische Funktionsablaufsteuerung (ST) umfaßt, deren Eingangsgrößen Temperaturwerte sind, die von diversen Temperaturfühlern (T) in den genannten Elementen erfaßt werden. Die beiden auf den höheren Temperaturniveaus arbeitenden Wärmetauscher (B) und (C) sind ferner brauchwasserseitig über je ein Mischventil (MV1, MV2) bygepaßt. Je nach Sonneneinstrahlung bzw. Temperatur des zirkulierenden Mediums werden sukzessive die Wärmetauscher mit höherem oder tieferem Temperaturniveau oder Kombinationen davon in den Medium-Kreislauf eingeschaltet. Ferner ist ein Überhitzungsschutz vorgesehen, der das Zirkulations-Medium bei Überhitzungsgefahr sukzessive durch die Wärmetauscher mit den niedrigeren Temperaturniveaus leitet. Fremdheizungsladekreisläufe (34) ergänzen die Vorrichtung für den Ganzjahresbetrieb.

0006210

CIBA-GEIGY AG
Basel (Schweiz)

37-11759/11998/+

## Vorrichtung zur Warmwasserbereitung mittels Sonnenenergie

Die Erfindung betrifft eine Vorrichtung zur Warmwasserbereitung mittels Sonnenenergie, mit einem Sonnenkollektor und einem ersten und einem zweiten Wärmetauscher,
die brauchwasserseitig in Reihe geschaltet sind, wobei
der erste auf einem höheren Temperaturniveau und der
zweite auf einem niedrigeren Temperaturniveau arbeitet.

Sonnenenergieverwertungsvorrichtungen sind in zahlreichen
Publikationen, unter anderem auch im Artikel von R. Schärer
in "Elektrizitätsverwertung" Nr. 7/8 (1974) Verlag Elektrowirtschaft, Zürich; in einem Vortrag von E. Schnyder auf
der Tagung "Heizen mit Sonne" der Schweizerischen und
Deutschen Gesellschaft für Sonnenenergie von 8./9. November
1977 in Freiburg, BRD und in "Solar Energy Thermal Processes" von J.A. Duffie und W.A. Beckmann, Wiley Interscience 1974, ausführlich und in zahlreichen Varianten erläutert. Allen diesen bekannten Vorrichtungen haftet der
Nachteil an, dass sie die Sonnenenergie, insbesondere deren
minderwertigeren Anteil mit niedrigerem Temperaturniveau,
nur unbefriedigend auszunutzen vermögen.

Eine bedeutende Verbesserung in dieser Hinsicht brachte
die z.B. in der US-PS 4 063 546 beschriebene zweistufige
Sonnenenergieanlage. Bei dieser Anlage sind zwei im
wesentlichen selbständige Systeme mit je einem Kollektor,
einem Speicher und einem Wärmetauscher vorhanden, wobei
das eine System auf einem niedrigeren und das andere

auf einem höheren Temperaturniveau arbeitet. Eine ähnliche Anlage, jedoch ohne Latentwärmespeicher, ist auch aus der CH-PS 578 718 bekannt. Die Praxis hat gezeigt, dass jedoch auch diese bekannten Vorrichtungen hinsichtlich ihres Wirkungsgrads noch verbessert werden können.

Aufgabe der Erfindung ist, eine Vorrichtung der eingangs definierten Art derart zu modifizieren, dass sie eine bessere und exergiegerechtere Verwertung der anfallenden Sonnenenergie ermöglicht.

Die erfindungsgemässe Vorrichtung ist durch die in den Ansprüchen angeführten Merkmale gekennzeichnet.

Unter Wärmetauscher sind hier und im folgenden Vorrichtungen zu verstehen, welche es gestatten, dem durch die Sonnenenergie aufgeheizten Wärmeübertragungsmedium die in ihm enthaltene Wärmeenergie zu entnehmen, bis zu einem gewissen Grad zu speichern und an das zu erwärmende Medium, das in der Regel direkt das Brauchwasser ist, abzugeben. Typische Vertreter solcher Wärmetauscher bestehen aus einem flüssigkeitsgefüllten Gefäss mit zwei in die Flüssigkeit eintauchenden Wärmeaustauschschlangen, durch deren eine das von der Sonnenenergie aufgeheizte Medium und durch deren andere das Brauchwasser fliesst. Die Flüssigkeit im Gefäss dient dabei gleichzeitig als thermische Verbindung zwischen den beiden Schlangen und als Speichermedium. Unter Betriebstemperatur des Wärmetauschers ist dann die Temperatur der Flüssigkeit im Gefäss zu verstehen. In Spezialfällen kann das Brauchwasser selbst als Speichermedium verwendet werden, wobei dann natürlich eine der Wärmetauschschlangen wegfallen kann.

0006210

Wenngleich der eben beschriebene Wärmetauschertyp
besonders zweickmässig ist, versteht es sich, dass z.B.
die Speicher- und die Wärmetauschfunktion durchaus auch
auf getrennte Vorrichtungteile aufgeteilt sein könnten
und dass die Erfindung keineswegs auf die eben näher
beschriebenen boilerartigen Wärmetauschertypen eingeschränkt ist.

Im folgenden wird die Erfindung anhand eines in der
Zeichnung dargestellten Ausführungsbeispiels näher
erläutert. Es zeigen:

Fig. 1          ein Prinzipschema der Vorrichtung und
Fig. 2 und 3    zwei Schnitte durch einen Teil der
                Vorrichtung.

Die Vorrichtung umfasst darstellungsgemäss einen
Sonnenkollektor K, drei brauchwasserseitig in Serie
geschaltete Wärmetauscher A,B und C, einen Latentwärmespeicher S, eine Umwälzpumpe P, acht Ventile 1-8,
zwei Mischventile MV1 und MV2 sowie diese Teile untereinander verbindende, nicht mit Bezugsziffern versehene
Leitungen. Ferner sind sieben Temperaturfühler $T_K, T_A, T_B, T_C,$
$T_S, T_{W1}$ und $T_{W2}$ sowie eine von diesen angesteuerte und die
Ventile 1-8 betätigende Steuerung ST vorgesehen. Die Temperaturfühler erfassen die Temperatur des Zirkulationswassers
im Kollektor K, die Betriebstemperaturen der drei Wärmetauscher A-C, die Temperatur des Speichers S und die
Temperatur des aus den Wärmetauschern B und C
austretenden Warmwassers. Die Verbindungsleitung zwischen
der Steuerung und den Temperaturfühlern bzw. den Ventilen
sind der Uebersichtlichkeit halber nicht dargestellt.

Der Sonnenkollektor und die Wärmetauscher sind im
wesentlichen von bekannter Bauart, ebenso der Latentwärmespeicher. Jeder Wärmetauscher besteht im wesentlichen aus einem Behältnis 11, 21 bzw. 31, in welchem sich
ein wärmeübertragendes Medium hoher Wärmekapazität, z.B.
etwa Wasser, befindet. In dieses Medium tauchen je eine
Primärschlange 12, 22 bzw. 32 und eine Sekundärschlange
13, 23 bzw. 33 ein. Der Wärmetauscher C kann
als Medium zusätzlich noch ein Latentwärme speicherndes
Material, beispielsweise etwa Paraffin, enthalten.
Ferner ist dieser Wärmetauscher mit einer Zusatzheizung
34, insbesondere in Form einer elektrischen Heizspirale,
versehen.

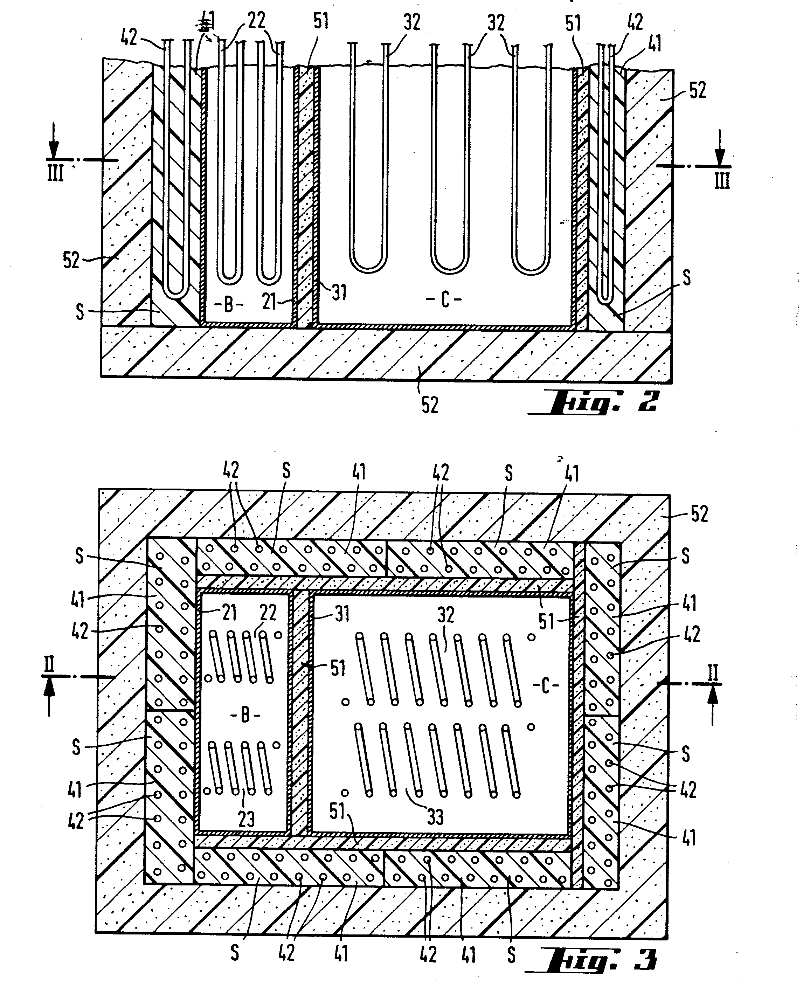

Der Latentwärmespeicher S besteht im wesentlichen aus
einem oder mehreren Blöcken 41 (Figs. 2, 3) eines vernetzten, teilkristallinen Kunststoffs, in dem eine Wärmetauscherschlange 42 eingebettet ist. Ein solcher Latentwärmespeicher ist ausführlicher in der eingangs genannten
US-PS 4 063 546 beschrieben.

Die Wärmetauscher B und C sowie
der Latentwärmespeicher S sind zu einer kompakten
baulichen Einheit zusammengefasst. Wie die Schnittdarstellungen der Fig. 2 und 3 zeigen, sind die beiden
Wärmetauscher von den den Latentwärmespeicher S
bildenden Platten 41 umschlossen, wobei der
Wärmetauscher C noch mittels einer Weichschaumstoffschicht 51 isoliert ist. Der gesamte Block ist mittels
einer weiteren Schaumstoffschicht 52 nach aussen
gegen Wärmeverluste isoliert.

Die Platten 41 des Latentwärmespeichers S sind im
Normalfall mit untereinander kommunizierenden Wärmetauschelementen 42 versehen. Es ist aber durchaus auch möglich,
auf diese Elemente ganz oder teilweise zu verzichten und
den Speicher über seine grosse Kontaktoberfläche mit dem
Wärmetauscher B zu laden.

Der Wärmetauscher A ist baulich separat angeordnet.
Er arbeitet auf dem niedrigsten Temperaturniveau und benötigt deshalb keine besondere Isolation.

Die Grössen bzw. Vlumina der drei Wärmetauscher A-C und
des Latentwärmespeichers S verhalten sich etwa wie
A:B:C:S=1:1:2-8:2. Das heisst, die Inhalte der Gefässe 11,
21 und 31 der Wärmetauscher A-C sind etwa 400 l und 800-
3200 l; das Volumen des Latentwärmespeichers, d.h. der
Platten 41 ist etwa 800 l. Diese Werte sind selbstverständlich nur beispielsweise zu verstehen und können natürlich den jeweiligen Erfordernissen angepasst werden.

Die Funktionsweise der Vorrichtung ist wie folgt:

Mit beginnender Sonneneinstrahlung erwärmt sich das Wasser
im Sonnenkollektor K. Sobald die Temperatur $T_K$ des Wassers
im Kollektor die Temperatur $T_A$ des Wärmetauschers A übersteigt, öffnet die Steuerung ST die Ventile 1 und 7, sodass
das Zirkulationswasser in einem ersten Ladekreislauf vom
Kollektor K über den Wärmetauscher A und die Pumpe P zurück
zum Kollektor zirkulieren kann.

Sobald, infolge stärkerer Sonneneinstrahlung, sich das
Zirkulationswasser über die Betriebstemperatur $T_B$ des Wärmetauschers B erwärmt oder, je nach Steuerungsart, die Differenz der Temperatur des Zirkulationswassers und des
Wärmetauschers B eine vorbestimmte Schwelle übersteigt,
schaltet die Steuerung auf einen zweiten Ladekreislauf um.
Dabei sind die Ventile 2, 5 und 7 offen und die Ventile
1,3,4 und 6 geschlossen. Das warme Wasser zirkuliert
nun vom Kollektor K über den Latentwärmespeicher S, den
Wärmetauscher B und die Pumpe P zurück zum

Kollektor und lädt dabei einerseits den Speicher auf und erhitzt anderseits das durch die Wärmetauscher fliessende Brauchwasser.

Falls die Temperatur des Zirkulationswassers auch über die (vorgegebene Minimal-) Betriebtemperatur $T_C$ des Wärmetauschers C steigt bzw. wenn die Differenz der Temperaturen des Zirkulationswassers und des Wärmetauschers C eine vorgegebene Schwelle übersteigt, schaltet die Steuerung ST auf einen weiteren Ladekreislauf um, bei welchem die Ventile 3 und 7 offen und die Ventile 1,2,4,5 und 6 geschlossen sind. Das Zirkulationswasser zirkuliert nun vom Kollektor über den Wärmetauscher C, den Speicher S, den Wärmetauscher B und die Pumpe P zurück zum Kollektor. Es gibt dabei die in ihm gespeicherte Wärmeenergie in den beiden Wärmetauschern B und C an das Brauchwasser ab und lädt gleichzeitig den Latentwärmespeicher S weiter auf.

Bei normaler Witterung erreicht das Gebrauchswasser zumindest im Wärmetauscher C den gewünschten Sollwert $T_{Soll}$, z.B. etwa 55°C =328°K. Bei Schlechtwetterperioden oder im Winter kann es erforderlich sein, die Zusatzheizung 34 im Wärmetauscher C einzuschalten. Auch dies erfolgt automatisch über die Steuerung ST, welche die Temperatur $T_{W1}$ im Wärme-tauscher C über den Temperaturfühler $T_{W1}$ laufend überwacht.

Die beiden Wärmetauscher B und C sind brauchwasserseitig je über ein Mischventil MV1 bzw. MV2 überbrückt. Die beiden Mischventile sind z.B. von der Art, wie sie bei Badezimmerarmaturen gebräuchlich sind. Sie regeln den Zufluss von kälterem und wärmerem Wasser derart, dass sich an ihrem Ausgang die gewünschte Temperatur einstellt. Diese kann z.B. bei etwa 55°C liegen. Die
Mischventile bewirken, dass die Wärmetauscher der
tieferen Temperaturniveaus stärker belastet und
damit eher zur Aufnahme minderwertigerer Energie
bereit werden. Die höherwertigere Energie der heisseren
Wärmetauscher wird dadurch geschont, sodass sich ein
wesentlich besserer Gesamteffekt ergibt.

In einer in der Zeichnung nicht dargestellten, einfacheren Variante fehlt das Mischventil MV1 und anstelle
des Mischventils MV2 ist ein gewöhnliches Dreiweg-
Elektroventil vorgesehen, welches von der Steuerung ST
angesteuert wird. Bei günstiger Witterung kann das
Brauchwasser bereits im Wärmetauscher B die Solltemperatur
erreichen. Wenn dies über den Fühler $T_{W2}$ festgestellt
wird, schaltet die Steuerung ST das nicht dargestellte
Ventil so um, dass das warme Brauchwasser gar nicht
erst zum Wärmetauscher C, sondern direkt zum Verbraucher
gelangt.

Zu Zeiten besonders intensiver Sonneneinstrahlung kann
es vorkommen, dass sich die Wärmetauscher unzulässig hoch
aufheizen. Um dies zu vermeiden, ist ein Ueberhitzungsschutz vorgesehen, welcher wie folgt funktioniert:

Sobald die Temperatur des Wärmetauschers C über eine vorgegebene Grenztemperatur $T_{grenz}$ von z.B. 85°C (=353°K)
ansteigt, schaltet die Steuerung ST vom dritten Ladekreislauf auf den zweiten Ladekreislauf zurück, welcher den
Wärmetauscher C nicht mehr enthält. Dadurch beginnt sich
der Wärmetauscher B aufzuheizen. Sobald auch dessen Temperatur über einen gewissen Grenzwert $T_{grenz}$ von z.B. 80°C
ansteigt, schaltet die Steuerung auf den ersten Ladekreis zurück, der ausser der Pumpe P nur noch den Wärmetauscher A enthält. Sollte sich auch dieser Wärmetauscher noch zu stark erwärmen, öffnet die Steuerung das Ventil 8, wodurch kaltes Brauchwasser durch den Wärmetauscher A läuft und diesen kühlt. Auf diese Weise ist in jedem Fall ein ausreichender Ueberhitzungsschutz gewährleistet, wobei die auf hohem Temperaturniveau in den Wärmetauschern C und B sowie im Speicher S gespeicherte wertvolle Energie nicht angetastet wird.

Wenn die Temperatur des Zirkulationswassers niedriger ist als die Temperatur des Wärmetauschers A und unter der Bedingung, dass der Latentwärmespeicher zumindest teilweise geladen ist, seine Temperatur $T_S$ also grösser als eine vorgegebene Minimaltemperatur $T_{min}$ ist, und ausserdem die Speichertemperatur grösser als die des Wärmetauschers B ist, schaltet die Steuerung auf einen Entladekreislauf, bei dem die Ventile 5 und 6 offen und die Ventile 1, 2, 3, 4, und 7 geschlossen sind. Das Zirkulationswasser zirkuliert so vom Latentwärmespeicher S über den Wärmetauscher B und die Pumpe P zurück zum Speicher S. Dabei wird das Brauchwasser im Wärmetauscher B erwärmt und gleichzeitig der Speicher entladen.

Für die Wintersaison oder für längere Schlechtwetterperioden besteht auch die Möglichkeit, den Speicher S in einem weiteren Kreislauf über die im Wärmetauscher C angeordnete Zusatzheizung, z.B. mittels des billigeren Nachtstroms, zu laden. Dazu wird die Steuerung ST entweder von Hand oder von einer Schaltuhr veranlasst, die Ventile 4 und 6 zu öffnen, die Ventile 1, 2, 3, 5, und 7 zu schliessen und die elektrische Zusatzheizung 34 im Wärmetauscher C einzuschalten. Das Zirkulationswasser fliesst dann vom Wärmetauscher C über den Latentwärme-

0006210

speicher S, den Wärmetauscher B und die Pumpe P zurück
zum Wärmetauscher C.

Die Steuerung ST selbst ist von an sich beliebiger Bauart.
Sie kann elektromechanisch oder rein elektronisch konzipiert sein und enthält neben den Eingängen für die diversen
Temperaturfühler und den Ausgängen für die Ventile und
die Ansteuerung der Zusatzheizung weitere Eingänge für die
Einstellung der Solltemperatur $T_{Soll}$, Grenztemperaturen
$T_{Grenz}$ und Minimaltemperaturen $T_{Min}$. Die elektrische Realisierung der Steuerung ist belanglos, solange nur der vorstehend geschilderte Funktionsablauf zumindest dem Sinn
nach gewährleistet ist. Selbstverständlich sind auch gewisse Modifikationen und Varianten möglich, die ebenfalls
im Rahmen der Erfindung liegen. Insbesondere ist es auch
möglich, anstelle der einfachen Temperaturfühler mit
Differenzthermostaten zu arbeiten.

Abgesehen von der maximalen Ausnützung der eingestrahlten
Sonnenenergie, und zwar auch der niedererwertigen Energie,
hat die vorstehend beschriebene Anlage noch den Vorteil
relativ geringer Gestehungskosten. So sind zum Beispiel
für die diversen Kreisläufe nur ein Kollektor und nur eine
einzige Umwälzpumpe erforderlich. Auch können relativ
billige Sonnenkollektoren verwendet werden und auch für die
Wärmetauscher sind keine teuren Sonderkonstruktionen nötig.

Durch die Wärmetauscherstufe A auf niedristem Temperaturniveau kann auch die weniger wertvolle Sonnenenergie, die
beispielsweise bei trübem Wetter immer noch vorhanden ist,
zu einem grossen Teil ausgenutzt werden.

Durch das By-Passen des bzw. der Wärmetauscher(s) auf
höherem Temperaturniveau wird das Brauchwasser lediglich
auf die gewünschte Minimaltemperatur erwärmt. Dadurch wird
einerseits weniger von der wertvolleren Energie auf höherem Temperaturniveau verbraucht und andererseits die Temperatur
der auf niedrigerem Niveau arbeitenden Wärmetauscher erniedrigt, sodass sie auch weniger wertvolle Energie besser
und vermehrt aufnehmen können. Beim erfindungsgemässen dreistufigen System ist dadurch vor allem der Wärmetauscher A
öfter bereit diffuse Wärme zu speichern, die dann zum Vorwärmen des kalten Brauchwassers verwendet werden kann. Die
tiefen Temperaturen des Wäremtauschers B und insbesondere
des Wärmetauschers A bewirken niedrige Kreislauftemperaturen
und damit einen wesentlich besseren Wirkungsgrad des Kollektors und damit schliesslich der Gesamtanlage. Ausserdem
besteht damit die Möglichkeit, vor allem mit der Stufe
A auch minderwertige Abwärme zu nutzen.

Besonders vorteilhaft ist die Ausbildung der Wärmetauscher
und Speicher als plattenförmige Elemente. Auf diese Art wird
ein guter Wärmetausch erreicht. Das Medium für den Wärmetransport, bei dem es sich nicht unbedingt nur um Wasser
handeln muss, steht dabei nicht unter Druck und muss nicht
erneuert werden, sodass es mit dem nötigen Korrosionsschutz versehen werden kann.

Vorstehend wurde eine dreistufige Vorrichtung mit
einem Latentwärmespeicher beschrieben. Es versteht
sich, dass für weniger anspruchsvolle Einsatzzwecke
oder in Gegenden mit überdurchschnittlicher Sonneneinstrahlung eventuell auch auf den Latentwärmespeicher
verzichtet werden kann. In diesem Falle würde sich die
Anlage durch Wegfall einiger Ventile etwas vereinfachen.

Die erfindungsgemässe Vorrichtung ist selbstverständlich
nicht nur im Zusammenhang mit Sonnenenergie verwendbar,
sondern ist auch zur Verwertung von Abwärme etc. geeig- net für z.B. Raumheizung, Warmwasserbereitung, Trocknungsanlagen in Gewerbe und Landwirtschaft etc. Ferner ist
die Vorrichtung auch in Kombination mit Klimaanlagen,
Kühlaggregaten etc. einsetzbar.

Patentansprüche

1. Vorrichtung zur Warmwasserbereitung mittels Sonnenenergie, mit einem Sonnekollektor (K), einem Latentwärmespeicher (S) und einem ersten und einem zweiten Wärmetauscher (A, B) die brauchwasserseitig in Reihe geschaltet
sind, wobei der erste (A) auf einem niedrigeren Temperaturniveau und der zweite (B) auf einem höheren Temperaturniveau arbeitet, dadurch gekennzeichnet,

- dass die Wärmetauscher (A, B) mit dem Speicher (S)
  und dem Kollektor (K) über Leitungen und Ventile (1-7) zu
  drei Kreisläufen zusammenschaltbar sind, von denen der
  eine den Kollektor (K) und den ersten Wärmetauscher (A),
  der andere den Kollektor (K), den Speicher (S) und den
  zweiten Wärmetauscher (B) und der dritte den Speicher (S)
  und den zweiten Wärmetauscher (B) sowie jeder Kreislauf
  ein Umwälzmittel (P) enthält,

- und dass Fühler für die Temperatur ($T_K$) des Zirkulationsmediums im Kollektor (K), die Betriebstemperaturen
  ($T_A$, $T_B$) der beiden Wärmetauscher (A, B) und die Temperatur ($T_S$) des Speichers (S) sowie eine mit diesen Fühlern
  zusammenarbeitende Steuerung (ST) vorgesehen sind, welche

- a) den ersten Kreislauf aktiviert, wenn die Kollektortemperatur ($T_K$) höher als die Betriebstemperatur ($T_A$)
  des ersten Wärmetauschers (A) und niedriger als die des
  zweiten Wärmetauschers (B) ist,

- b) den zweiten Kreislauf aktiviert, wenn die Kollektortemperatur ($T_K$) höher als die Betriebstemperatur ($T_B$)
  des zweiten Wärmetauschers (B) ist, und

- c) den dritten Kreislauf aktiviert, wenn die Kollektortemperatur ($T_K$) tiefer als die Betriebstemperatur ($T_A$)
  des ersten Wärmetauschers (A) und gleichzeitig die Temperatur ($T_S$) des Speichers (S) höher als die Betriebstemperatur ($T_B$) des zweiten Wärmetauschers (B) ist.

2. Vorrichtung nach Anspruch 1, dadurch gekennzeichnet,

- dass ein dritter Wärmetauscher (C) vorgesehen ist, der mit den beiden anderen Wärmetauschers (A, B) brauchwasserseitig in Reihe liegt und auf einem höheren Temperaturniveau arbeitet als der zweite Wärmetauscher (B),

- dass der dritte Wärmetauscher (C) über Leitungen und Ventile (1-7) mit dem zweiten Wärmetauscher (B), dem Speicher (S) und dem Kollektor (K) zu einem vierten Kreislauf zusammenschaltbar ist,

- dass ein weiterer, mit der Steuerung (ST) zusammenarbeitender Fühler für die Betriebstemperatur ($T_C$) des dritten Wärmetauschers (C) vorgesehen ist,

- und dass die Steuerung

- d) den vierten Kreislauf aktiviert, wenn die Kollektortemperatur ($T_K$) höher ist als die Betriebstemperatur ($T_C$) des dritten Wärmetauschers (C).


3. Vorrichtung nach Anspruch 2, dadurch gekennzeichnet, dass der dritte Wärmetauscher (C) mit Heizmitteln (34) ausgestattet und mit dem Speicher (S) und dem zweiten Wärmetauscher (B) sowie einem Umwälzmittel (P) zu einem fünften, über die Steuerung aktivierbaren Kreislauf zusammenschaltbar ist.


4. Vorrichtung nach Anspruch 2, dadurch gekennzeichnet, dass ein Abfluss für erwärmtes Brauchwasser vorgesehen ist, der über die mit einem weiteren Temperaturfühler zusammenarbeitende Steuerung (ST) mit dem Brauchwasserausgang des zweiten oder des dritten Wärmetauschers (B, C) verbindbar ist, je nach dem, ob die Temperatur des Brauchwassers am Ausgang des zweiten Wärmetauschers (B) über oder unter einer vorgegebenen Solltemperatur ($T_{Soll}$) liegt.

5. Vorrichtung nach Anspruch 1, dadurch gekennzeichnet, dass der erste Wärmetauscher (A) eine von den übrigen Teilen räumlich im wesentlichen getrennte Einheit bildet und/oder nur wenig oder gar nicht wärmeisoliert ist.

6. Vorrichtung nach Anspruch 1, dadurch gekennzeichnet, dass der zweite Wärmetauscher (B) zumindest teilweise direkt vom Speicher (S) umschlossen bzw. in diesen eingebettet ist.

7. Vorrichtung nach Anspruch 1, dadurch gekennzeichnet, dass der Speicher (S) als wärmespeicherndes Medium teilkristallinen vernetzten Kunststoff enthält.

8. Vorrichtung nach Anspruch 1 oder 2, dadurch gekennzeichnet, dass die Wärmetauscher je ein Behältnis (11, 21, 31) mit einem wärmeübertragenden Medium umfassen, in welches eine primäre und eine sekundäre Austauschschlange (12, 22, 32; 13, 23, 33) eintauchen.

9. Vorrichtung nach den Ansprüchen 2 und 8, dadurch gekennzeichnet, dass der dritte Wärmetauscher (C) ein Latentwärmespeichermaterial als wärmeübertragendes Medium enthält.

10. Vorrichtung nach Anspruch 2, dadurch gekennzeichnet, dass die Steuerung (ST) vom vierten auf den zweiten Kreislauf und von diesem auf den ersten schaltet, wenn die Betriebstemperatur ($T_C$ bzw. $T_B$) des dritten bzw. zweiten Wärmetauschers (C, B) über je einen Grenzwert ($T_G$) ansteigt.

11. Vorrichtung nach Anspruch 10, dadurch gekennzeichnet, dass die Steuerung (ST) kaltes Brauchwasser durch den

0006210

ersten Wärmetauscher (A) fliessen lässt, falls auch dessen Betriebstemperatur ($T_A$) über einen Grenzwert ($T_G$) ansteigt.

12. Vorrichtung nach Anspruch 8, dadurch gekennzeichnet, dass die Wärmetauscher (B, C) plattenförmig ausgebildet sind.

13. Vorrichtung nach Anspruch 7, dadurch gekennzeichnet, dass der Speicher (S) aus plattenförmigen Elementen (41) besteht.

14. Vorrichtung nach einem der Ansprüche 2 bis 13, dadurch gekennzeichnet, dass der dritte Wärmetauscher (C) brauchwasserseitig über ein Mischventiel (MV2) bygepasst ist.

15. Vorrichtung nach einem der Ansprüche 1 bis 14, dadurch gekennzeichnet, dass der zweite Wärmetauscher (B) brauchwasserseitig über ein Mischventil (MV1) bygepasst ist.

Fig. 2

Fig. 3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 4 040 566 (CHIARELLI)<br>* Spalte 2, Zeilen 62-68; Spalte 3, Zeilen 1-58; Figur 2 * | 1,5 |
| D | CH - A - 578 718 (OEGGERLI)<br>* Spalte 1, Zeilen 39-58; Spalte 2, Zeilen 4-68; Spalte 3, Zeilen 1-9; Figur 1 * | 1,3 |
| | FR - A - 2 325 003 (FINTERM)<br>* Seite 4, Zeilen 15-39; Seite 5, Zeilen 1-12; Seite 6, Zeilen 25-40; Seite 7, Zeilen 1-40; Seite 8, Zeilen 1-40; Seite 9, Zeilen 1-40; Seite 10, Zeilen 1-14; Figur 1 * | 1,2,5 |
| D | US - A - 4 063 546 (SCHMID)<br>* Spalte 2, Zeilen 38-68; Spalte 3, Zeilen 23-68; Spalte 4, Zeilen 1-23, einzige Figur * | 1,5,7, 8 |
| | US - A - 3 931 806 (HAYES)<br>* Spalte 4, Zeilen 58-68; Spalte 5, Zeilen 10-65; Figur 1 * | 1 |
| | FR - A - 2 365 772 (LAING)<br>* Ansprüche 1 und 3 * | 12,13 |

./.

Der vorliegende Recherchenbericht wurde für alle Patentansprüche erstellt.

| Recherchenort | Abschlußdatum der Recherche | Prüfer |
|---|---|---|
| Den Haag | 17-08-1979 | CRAB |

EPA form 1503.1 06.78

**KLASSIFIKATION DER ANMELDUNG (Int.Cl.²)**

F 24 D 17/00

**RECHERCHIERTE SACHGEBIETE (Int. Cl.²)**

F 24 D
F 24 J

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| PE | FR - A - 2 392 338 (SACHS) <br> * Ansprüche 1,3,4; Figur 1 * | 1,2 | |
| PE | & NL - A - 78 05451 | | |
| PE | & DE - A - 2 724 011 | | |
| | ---- | | |
| | | | **RECHERCHIERTE SACHGEBIETE (Int. Cl.²)** |